# EUROPEAN PATENT APPLICATION

(11) **EP 2 061 032 A1**
(43) Date of publication of application: **20.05.2009**
(21) Application number: 09154526.9
(22) Date of filing: 02.04.2001
(51) Int. Cl.: G11B 27/031, G11B 27/034, G11B 27/34, H04N 5/00, G06F 3/033

(54) **Full news integration and automation for a real time video production system and method**

(30) Priority: 31.03.2000 US 193452 P
(62) Divisional of application: 01922919.4
(71) Applicant: THOMSON Licensing S.A., 92100 Boulogne-Billancourt (FR)
(72) Inventor: Holtz, Alex, JACKSONVILLE, FL 32223 (US); Snyder, Robert J., JACKSONVILLE, FL 32257 (US); Hoeppner, Charles M., JACKSONVILLE, FL 32277 (US); Fres, Gilberto, JACKSONVILLE, FL 32256 (US); Tingle, Keith Gregory, Neptune Beach, FL 32266 (US)
(74) Representative: Rossmanith, Manfred

(57) **Abstract**

An automated video production system having full news integration and automation. The automated video production system enables a producer to create a show rundown by selecting news stories for a live or live-to-tape video show. The system supports real time conversion of the show rundown into computer readable broadcast instructions for executing the news program. After the broadcast instructions are created, the director can instruct the system to execute the broadcast instructions in either a fully or semi-automatic mode. The fully integrated and automated video production system periodically monitors and synchronizes the show rundown with the broadcast instructions. After the show has been broadcasted, the broadcast instructions and a video recording of the show is stored for future use. For instance, the broadcast instructions can be retrieved and used in another show. Similarly, the recording of the show can be retrieved and re-broadcasted, for example, over the internet.

## Description

### Field of the Invention

The present invention relates generally to video production, and more specifically, to automating the execution of a live or live-to-tape video show.

### Related Art

Conventionally, the execution of a live or live-to-tape video show, such as a network news broadcast, talk show, or the like, is largely a manual process involving a team of specialized individuals working together in a video production environment having a studio and control room. The video production environment is comprised of many diverse types of video production devices, such as video cameras, microphones, video tape recorders (VTRs), video switching devices, audio mixers, digital video effects devices, teleprompters, and video graphic overlay devices, etc. The basics of video production techniques is described in "Television Production Handbook," Zettl, 1997 Wadsworth Publishing Company, which is incorporated herein by reference.

In a conventional production environment, the video production devices are manually operated by a production crew (which does not include the performers and actors, also known as the "talent") of artistic and technical personnel working together under the direction of a director. A standard production crew is made up of nine or more individuals, including camera operators (usually one for each camera, where there are usually three cameras), a video engineer who controls the camera control units (CCUs) for each camera, a teleprompter operator, a character generator operator, a lighting director who controls the studio lights, a technical director who controls the video switcher, an audio technician who controls an audio mixer, tape operator(s) who control(s) a bank of VTRs, and a floor director inside the studio who gives cues to the talent. Typically, the director coordinates the entire production crew by issuing verbal instructions to them according to a script referred to as a director's rundown sheet. Generally, each member of the production crew is equipped with a headset and a microphone to allow constant communications with each other and the director through an intercom system.

The director's rundown sheet also includes instructions from the show's producer. For instance, to produce a news program, the producer generally selects the news stories that will be featured on the show. Once selected, the producer creates a show rundown identifying the stories and delivers the show rundown to the director. The director, in turns, uses the show rundown as the basis for creating the director's rundown sheet.

During the execution of a live or live-to-tape video show, the production crew must perform multiple parallel tasks using the variety of video production devices. Furthermore, these tasks must all be coordinated and precisely synchronized according to very strict timing requirements. Coordination between the production crew, the director and the talent is vitally important for the successful execution of a show. Moreover, the producer's input (via the producer's show rundown) also significantly influences the execution of the show. Accordingly, the logistics of executing a show are extremely difficult to plan and realize.

As such, executing a show is extremely susceptible to errors. The industry knows that errors are generally expected to occur during the execution of a show. Accordingly, experienced production crews not only attempt to reduce the frequency of errors, but also attempt to react quickly in taking corrective action so that the inevitable errors that do occur are unnoticed by the viewing audience. However, it is quite apparent by watching live television broadcasts that this goal is not always met.

Another problem with the conventional production environment is that the director does not have total control in executing a show because of the director's reliance on the production crew. The production crew does not always follow the instructions of the director due to mis-communication and/or misinterpretation of the director's cues. Further, the director cannot achieve certain desired transitions and sophisticated or enhanced visual effects because of the real time nature of the execution of the show and the fast paced/short time available. Additionally, the director must also incorporate instructions from the producer (I.e., show rundown) that are also subject to mis-communication and/or misinterpretation.

Another problem arises from the inability to quickly and accurately incorporate changes into the director's rundown sheet. For example, if the producer decides to add or drop a news story from a news program, these instructions must be communicated to the director so that the rundown sheet can be appropriately adjusted. The time and level of effort to implement these changes adversely affect the time and costs of producing a live broadcast. Similarly, if the contents of the news story should change prior to broadcast, it would be difficult to timely and accurately update the teleprompter, transitional elements and visual effects during a live broadcast. Consequently, the talent (i.e., news correspondent) may not have the latest available data.

The real time nature of the execution of the show creates great stress for the director, producer, production crew, and talent. Everyone is extremely concerned about failure. The real time nature of the execution of the show also necessitates recreation of the format, including transitions and special effects, for the show.

Another draw back of the conventional production environment, is that failure of any member of the production crew to be present for the execution of the show may prevent or hamper the show from occurring as planned. Thus, directors constantly worry about whether crew members win show up for work, particularly on weekends and holidays.

Conversely, there are situations in other than broadcast environments, such as business television and video training environments, where due to downsizing or budgetary constraints the number of available personnel for the production crew is so limited that shows cannot be produced with high quality.

Producing live or live-to-tape video shows is very expensive because of the large size of the video production crew. The compensation to the individuals that make up the production crew is substantial, and can run in the range of several million dollars per year for the entire crew. Furthermore, the compensation for a member of a production crew is commensurate with the video market of the station. The level of compensation for the top markets is substantially higher than for the lesser markets, and the compensation for network affiliates is higher than independent broadcasters and cable networks. This disparity in compensation produces frequent turnover in production crew personnel causing a director to frequently hire and train new members of the crew.

Another disadvantage with the conventional production environment is the inability to preview the show. That is, it is costly and impractical for the production crew to rehearse the show prior to its execution. The talent and the director cannot preview the transitions in a succinct manner.

Therefore, what is needed is a video production system and method that addresses the above problems.

The document WO99/05821 discloses a centralized control system allowing a director to control external devices used during a broadcast.

The document WO98/45789 discloses a system using a news story mark up language which defines machine control commands which may be used to automate control functions.

### Summary of the Invention

In one aspect of the present invention, there is provided a method according to claim 1. In another aspect, there is provided a system according to claim II. In another aspect there is provided a computer program product according to claim 13.

An embodiment of the present invention solves the above identified problems in conventional systems by providing full news integration and automation to a video production system, method and computer program product (herein collectively referred to as the "Full News Integration and Automation System". "Full News System", or "system" for purposes of brevity). The system and method automatically converts a show rundown in to a set of computer readable broadcast instructions (herein referred to as "broadcast instructions") and automates the execution of a live or live-to-tape video show. In an embodiment, the set of broadcast instructions is created from the Transition Macro™ timeline-based application program, developed by ParkerVision, Inc. (Jacksonville, FL), that can be executed to control an automated video production system (AVPS) that supports live and Iive-to-tape broadcasts of a television program. The AVPS is preferably, but not necessarily, of the type described in commonly assigned U.S. Patent Application No.09/215,161, filed December 18, 1998, filed by Holtz et al., and entitled "Real Time Video Production System and Method" (hereinafter referred to as "the '161 application"). The disclosure of the '161 application is incorporated herein by reference as though set forth in its entirety.

The AVPS is configured to allow a single person ("a video director") to control all video production devices used in executing the show. Such devices include, but are not limited to, video cameras, robotic pan/tilt heads, video tape players and recorders (VTR)s, video servers and virtual recorders (VR)s, character generators, still stores, digital video disk players (DVD)s, digital video effects (DVE)s, audio mixers, audio sources (e.g., CDS and DATs), video switchers, and teleprompting systems.

The full news integration and automation capability provided by the system and method of the present invention allows a producer to select news stories from a plurality of sources and create a show rundown. The rundown is automatically converted to a computer readable format to instruct the AVPS. As a result, the automation capability provided by the AVPS allows the video director to pre-produce a live show (such as a news show or talk show), preview the show in advance of "air time", and then, with a touch of a button or other trigger, execute the live show. Consequently, a live show or live-to-tape show can be executed more cost efficiently, with greater control over logistics and personnel, with enhanced functionality and transitions, in less time and with less stress, and with fewer people and fewer human errors than was previously possible. The method and system of the present invention also allows the video director to reuse formats of prior shows by leveraging show templates.

In an embodiment of the present invention, news stories are collected from a plurality of sources and stored in a file on a library within a computer server. The producer creates a show rundown by compiling a list of news stories. The show rundown identifies the location of each news story file and any affiliated video or audio recordings. The AVPS automatically converts the show rundown to broadcast instructions that can be used to execute the show.

Once the AVPS creates the broadcast instructions, the director can instruct the AVPS to execute the broadcast instructions in either a full automation mode or a semi-automatic mode, as described in the '161 application. It should be noted that the broadcast instructions, whether executed in fully or semi-automatic mode, can always be overridden by manual controls. That is, the video director always has the ability to manually control a video production device, regardless of whether the broadcast instructions are in the process of being executed. After executing the show, the broadcast instructions and a video recording of the show is saved for future use.

In another embodiment of the present invention, the broadcast instructions can be retrieved and used in another show. Similarly, the recording of the show can be retrieved and rebroadcasted. In an embodiment of the present invention, the rebroadcast is transmitted over the Internet.

An advantage of an embodiment of the present invention is the real time conversion of the show rundown to broadcast instructions with little to no human intervention. This process saves time and mitigates errors due to mis-communication or misinterpretations.

Another advantage of an embodiment of the present invention is that each news story identified in the broadcast instructions are linked to the news stories in the show rundown. Therefore, changes to the show rundown (I.e., addition or deletion of news stories) can be incorporated into the broadcast instructions with minimal human interference.

Another advantage of an embodiment of the present invention is that the broadcast instructions can be modified while a show is executing. This feature allows the producer to modify the content of a show in real time. For example, it allows the producer to introduce a late breaking news segment, drop news stories, update the news stories or the like into a news broadcast, as the show is being aired.

The cost and time savings may therefore be substantial. Typically, it takes a half hour to a hour for a director to create a rundown sheet from the producer's rundown. In the present invention, the conversion is implemented in a nominal amount of time. Additionally, the human errors that normally occur during the execution of a show are no longer an issue.

Further features and advantages of the present invention, as well as the structure and operation of various embodiments of the present invention, are described in detail below with reference to the accompanying drawings.

### Brief Description of the Figures

The accompanying drawings, which are incorporated herein and form part of the specification, illustrate the present invention and, together with the description, further serve to explain the principles of the invention and to enable a person skilled in the pertinent art(s) to make and use the invention. In the drawings, like reference numbers indicate identical or functionally similar elements. Additionally, the left-most digit(s) of a reference number identifies the drawing in which the reference number first appears.
FIG. 1 illustrates one embodiment of a full news integrated and automated video production system of the present invention;
FIG. 2 shows a flow chart representing the general operational flow according to an embodiment of an automated video production method of the present invention;
FIG. 3 shows a flow chart representing the general operational flow according to an embodiment of a full news integrated and automated video production method of the present invention;
FIG. 4 shows a flow chart representing the general operational flow according to an embodiment of the present invention for a full news integrated and automated video production method for subsequent broadcasts;
FIG. 5 illustrates a block diagram of an exemplary processing system useful for implementing the present invention;
FIG. 6 illustrates a second embodiment of a full news integrated and automated video production system of the present invention;
FIG. 7 illustrates a representative Script Viewer GUI according to one embodiment of the present invention;
FIG. 8 illustrates a representative TME GUI according to one embodiment of the present invention;
FIG. 9 illustrates a representative Rundown GUI according to one embodiment of the present invention;
FIG. 10 illustrates a representative GUI for entering broadcast instructions according to one embodiment of the present invention; and
FIG. 11 illustrates a representative GUI containing broadcast instructions according to one embodiment of the present invention.

### Detailed Description of the Preferred Embodiments

### I. Overview of the Present Invention

Embodiments of the present invention are directed to a system, method and computer program product (herein referred to collectively as the "Full News Integration and Automation System," "Full News System," "system" or "the present invention" for purposes of brevity) for automatically converting a show rundown into computer readable broadcast instructions, such as a ParkerVision® Transition Macro™, to be executed in an automated video production system (AVPS) that supports "live" and "live-to-tape" broadcasts of a television program. The AVPS is preferably, but not necessarily, of the type described in the '161 application.

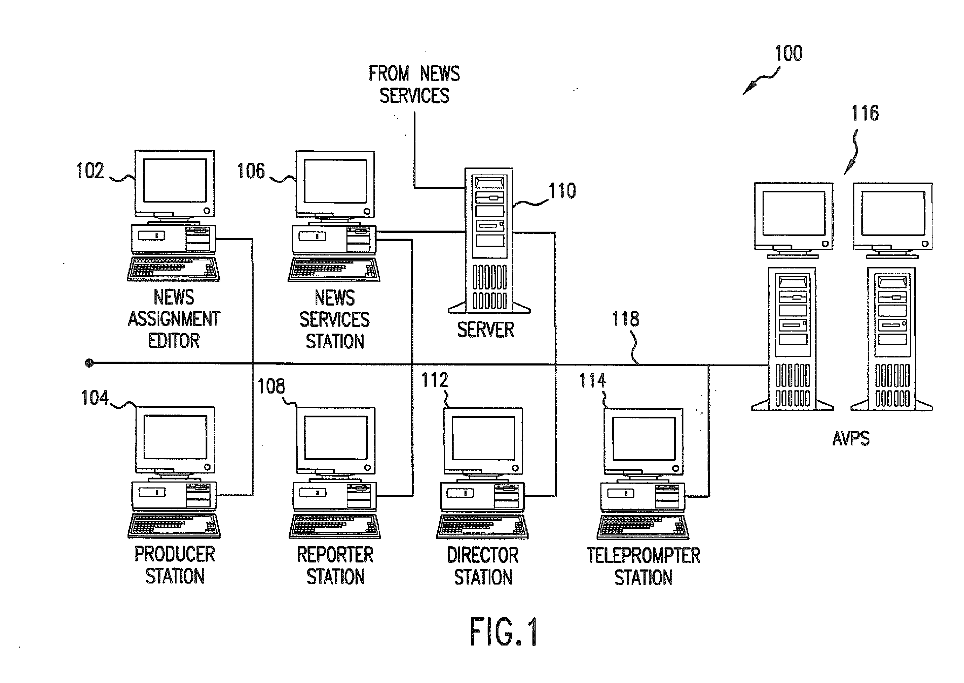

FIG. 1 illustrates, according to One embodiment of the present invention, a fully integrated and automated video production system 100. The present invention includes analog and digital video production environments. As shown in FIG. 1, video production system 100, in a representative embodiment, includes a plurality of workstations, a server 110 and an automated video production system (AVPS 116), all connected to each other by a central bus 118 to form a local area network (LAN), wide area network (WAN), or the like as would be apparent to a person skilled in the relevant art(s). Bus 118 can be a coaxial, fiber optic or twisted cable used for bidirectional communications. Bus 118 is configurable to support broadband or baseband, such as Ethernet, network protocols. As described above, AVPS 116 is preferably, but not necessarily, of the type described in the '161 application.

System 100 also includes computer workstations for a news assignment editor 102, producer 104, news services 106, local reporter or correspondent 108, director 112 and teleprompter system 114. The news services station 106 can be used to access information from wire services or news automation services, such as AVSTAR^{™} and the Associated Press, through server 110. Alternatively, one can use one of the other workstations to directly access the news automation services through server 11O. It would be readily apparent to a person skilled in the relevant art(s) that additional workstations can be connected to bus 118 to support system 100. For instance, any member of a television studio that plays a role in identifying, creating and editing news stories and generating a show rundown can have a separate workstation connected to bus 118 or can use one of the workstations depicted in FIG. 1.

Server 110 represents one or more computers providing various shared resources with each other and to the other network computers. The shared resources include files for programs, web pages, databases and libraries; output devices, such as, printers, plotters, teleprompter systems 114 and audio/video recorders and players; and communications devices, such as modems and Internet access facilities. The communications devices can support wired and wireless communications, including satellite, terrestrial, radio, microwave and any other form or method of transmission. Server 110 is configured to support the standard Internet Protocol (IP) developed to govern communications over public and private Internet backbones. The protocol is defined in Internet Standard (STD) 5, Request for Comments (RFC) 791 (Internet Architecture Board). Server 110 can also support transport protocols, such as, Transmission Control Protocol (TCP), User Datagram Protocol(UDP) and Real Time Transport Protocol (RTP). Server 110 is also configured to support various operating systems, such as, Netware™ available from Novell®; MS-DOS®, WindowsNT® and Windows®3.xx/95/98/2000 available from Microsoft®; Linux® available from Linux Online Inc.; Solaris™ available from Sun Microsystems, Inc.; and the like as would be apparent to one skilled in the relevant art(s).

### II Automated News Video Production

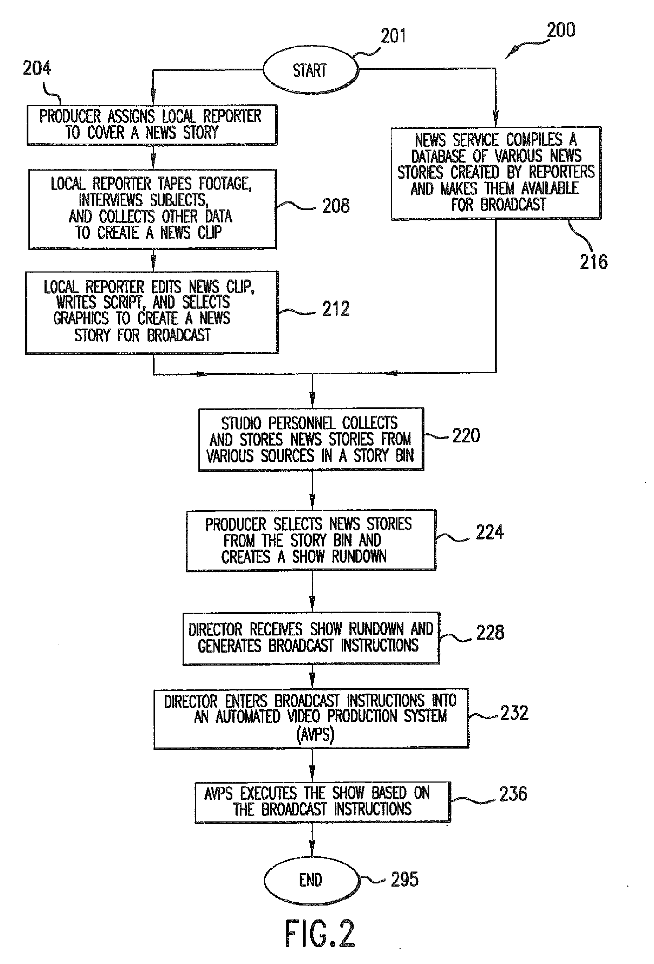

Referring to FIG. 2, flowchart 200 represents the general operational flow of an embodiment of the present invention. More specifically, flowchart 200 shows an example of a control flow for producing a news program in an automated video production environment. Generally, the producer is the architect of the news program. The producer selects the news stories, assembles and organizes a show rundown that provides the organization, identification and timing of a particular broadcast of the news program by element or news story. The elements can include instructions to implement specific effects with the news story, such as voice over (VO), sound on tape (SOT), over the shoulder (SOT), introduction, package and tag (INTRO/PACKAGE/TAG), and the like. In practice, the show rundown continuously changes based on breaking news and field acquisition timing.

To select the news stories, the producer can either use local reporters to acquire the information or select the news story from a news automation service. The first method is illustrated at step 204. At step 204, assignment desk personnel, using workstation 102, are responsible for monitoring incoming news, including news automation services and local police, fire or rescue monitoring. Assignment desk personnel work in conjunction with the producer to determine which news stories are selected for the news program. Assignment desk personnel is also responsible for reporter and equipment assignment and scheduling. Accordingly, a local reporter(s) is assigned to cover a particular news event that can on topics related to weather, sports, human interests, market updates, and the like.

After the local reporter receives the assignment, at step 208, the local reporter researches the assigned news story and develops a script and package as defined by the producer. The reporter's assignment typically includes field acquisition with a videographer in some cases. As such, the reporter would visit the scene of the news event to make audio or video recordings to be used in a news clip. The reporter generally interviews the subject or witnesses, as appropriate, and collects other data to support the news clip.

In some instances, reporters would perform their own editing. In such cases, after the local reporter has gathered sufficient data, at step 212, the reporter utilizes workstation 108 to edit the news clip. During this process, the local reporter writes the script and selects graphics (e.g., inserts character generators into the script), as appropriate. Typically, the reporter does not generate the graphics, but rather include the text within a graphics template, such as a lower 3rd. The finished product is a news story to be broadcasted on the news program.

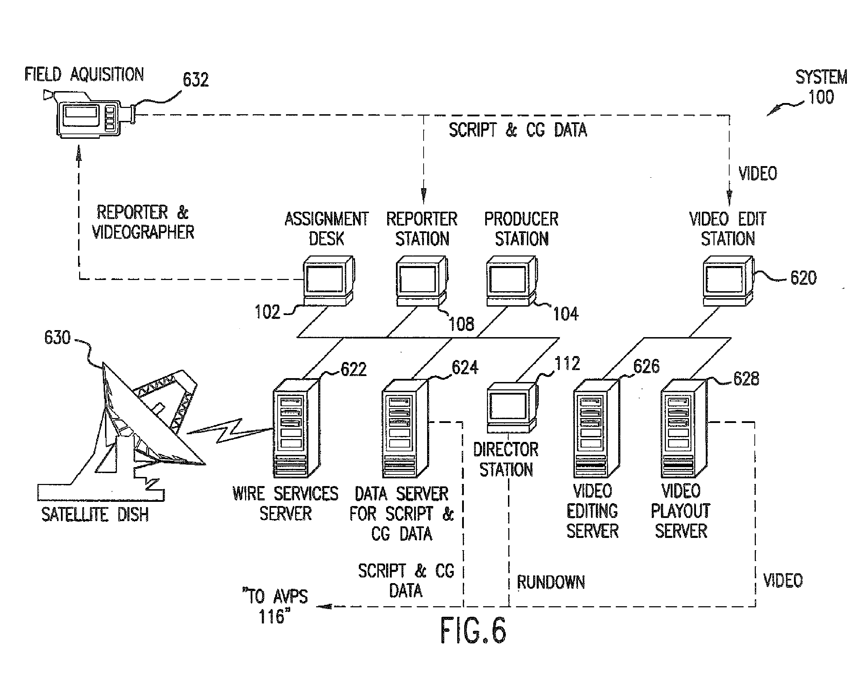

At step 220, the news story is saved to a file or folder within a directory or library on server 110. As discussed, referring, again, to FIG. 1, server 110 can represent one or more computers used to support the information process flow in system 100. However, in another embodiment, server 100 can represent multiple servers that supports specific functions within system 100. FIG. 6 illustrates a second embodiment of system 100. In this representative embodiment, server 110 is shown as wire services server 622, data server 624, video editing server 626 and video playout server 628. In this embodiment, data server 624 acts as the central repository of news stories prepared by the reporter. Data server 624 accordingly would include the script and graphics template.

Additionally, as shown in Fig. 6, the reporter can use video edit station 120 to edit the news clip produced during field acquisition 632, as discussed at step 208. Video editing server 626 and video playout server 628 can be used to archive the news clip prior and subsequent, respectively, to the completion of the editing process. Wire services server 622 can also be used to select news stories from news automation services, as discussed at step 216 below. Wire services server 622 also support archiving and retrieval of the selected news stories. As discussed with reference to server 110, wire services server 622 can support satellite communications 630, as shown in FIG. 6, as well as terrestrial, radio, microwave and any other form or method of wired or wireless transmission.

Consequently, referring, again, to FIG. 2, at step 220, each news story file located in data server 624 contains a script and associated graphics created by the reporter. The news story file also includes links to the associated video clip or audio recording located in video playontserver628. The script includes the text of the story that can be loaded onto a teleprompter system 114. The text can be saved in any standard format that call be converted to rich text format for display on the teleprompter system's screen. In addition to the text being read by the talent, the news story file also includes commands and instructions to incorporate specific graphic effects associated with the news story. The graphic effects can include links to files containing video, audio, character generators, and still stores. For example, the news story file can include embedded instructions to append a file having a video clip of a story related to the text stored in the file.

Alternatively, as shown at step 216, news stories can be selected from one or more news automation services. News automation services, such as AVSTAR^{™} and the Associated Press, collect news stories on a variety of subjects from numerous reporters. The subjects include both local and global topics of interests. Referring back to FIG. 1, using any of the workstations linked to bus 118, studio personnel can access the news stories by using the communications device coupled to server 110. Also, wire services server 622 can be used to access the news stories as shown in FIG. 6. After one has selected a particular news story of interest, at step 220, the news story can be saved to a file or directory on server 110 or wire services server 622.

For example, a local reporter can select a news story from a news automation service, edit the story, write a script and select graphics to create a news story for broadcast. The edited story would then be saved to a file or folder. In other words, server 110 is also a story bin containing a collection of various news stories on a variety of topics. Referring again to FIG. 6, data server 624 can also serve as the story bin. The story bin can be configured to have separate directories or libraries for storing news stories from each source (e.g., AVSTAR^{™}, Associated Press, individual local reporter, and the like).

At step 224, the producer searches the story bin within server 110 or data server 624 to select news stories for the news program's show rundown. Typically, the producer lists the news stories to create the show rundown at workstation 104 and delivers the document to the show's director. The show rundown can be hand delivered to the director or electronically mailed to the director's workstation 112. The show rundown can also be saved to a file on a directory or library in server 110 which is subsequently read by the director at workstation 112.

At step 228, the director receives the show rundown and creates a director's rundown sheet. The director manages the on-air presentation of the news program. The director is responsible for the look and feel, camera shots, sources, transitions and other elements required to execute the show. After completing the rundown sheet, the director will call the show. Calling the show is basically the act of communicating what happens next to all production stations, including the video switch operator, audio operator, graphics operator, camera operators, teleprompter operator, tape machine operators and the like. The director coordinates the entire production crew by issuing verbal instructions to them according to the director's rundown sheet. Each member of the production crew is equipped generally with a headset and a microphone to allow constant communications with each other and the director through an intercom system, e.g., IFP.

However, as described in the '161 application, AVPS 116 enables the video director to automate the execution of the news program or show. To do so, the director must instruct AVPS 116 to read and execute the information on the rundown sheet. This is accomplished by creating computer readable broadcast instructions, such as a ParkerVision® Transition Macro™ described in the' 161 application, to specify one or more video production commands.

As shown at step 232, the director enters the broadcast instruction into AVPS 116, and at step 236, AVPS 116 executes the show based on the broadcast instructions. Typically, each line or segment within the broadcast instructions corresponds to a line item segment command from the director's rundown sheet. Executing the broadcast instructions, or executing the show based on the broadcast instructions, means transmitting the one or more video production commands that are specified by the broadcast instructions to the appropriate video production devices. Upon receiving a video production command, a video production device performs the function corresponding to the received command. In this manner, AVPS 116 provides automated control of the video production devices, and thereby provides a system for automating the execution of a show in real time. This feature provides the director with the advantage of not having to rely on a production crew to execute a show. The cost and time savings this feature provides are therefore substantial. Additionally, the human errors that normally occur during the execution of a show can be mitigated.

However, the system illustrated in 200 is not completely free of the inefficiencies attributable to human intervention. For instance, if the producer subsequently decides to add or drop a news story, or otherwise revises the show rundown, this information would have to be communicated to the director so that the broadcast instructions can be modified. If the contents of the news stories should change prior to broadcast, these changes also would have to be communicated to the director. Furthermore, during the process of converting the show rundown to broadcast instructions, or revising the broadcast instructions, the director can make errors or omit to include required information. In all of these instances, there exist a probability of making mistakes and a significant increase in the cycle time for producing the news program.

### III Full News Integration and Automation

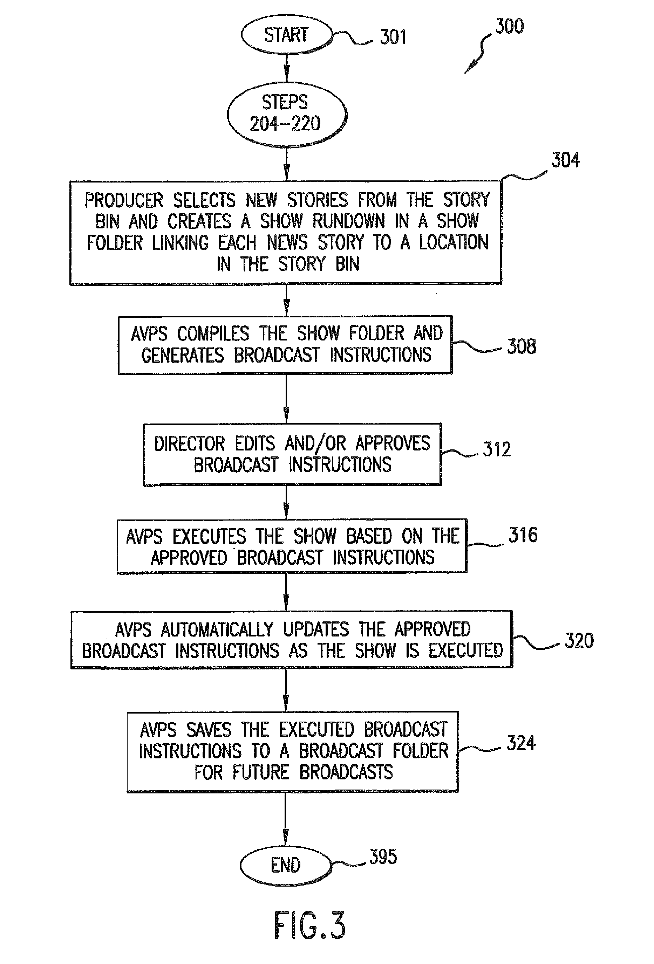

The method and system of the present invention overcomes these problems by providing a mechanism to automatically convert the show rundown to broadcast instructions with less human intervention. Referring to FIG. 3, flowchart 300 represents the general operational flow of an embodiment of the present invention. More specifically, flowchart 300 shows an example of a control flow for producing a news program in a video production environment having full news integration and automation.

Steps 204 to 220 are identical to the process steps in FIG. 2 for control flow 200. After step 220, control flow 300 begins to differ significantly from the embodiment described in control flow200. At this point, control flow 300, passes to step 304. At step 304, the producer, once again, searches the story bin within server 110 or data server 624 to select news stories to create the producer's show rundown. However, instead of saving the show rundown to a file or manually delivering it to the director, at step 304, the show rundown is saved to a show folder on a directory or library within server 110 or data server 624, The show folder is a file containing a complete listing of the news stories that have been selected for broadcast. The show folder identifies the current location, i.e., path and filename for each news story. If the status or location of the news stories should subsequently change, system 100 automatically updates the information in each affiliated show folder. For example, if the show folder includes a file downloaded from an automated news service, the show folder would have a hyperlink to the flies location on the server (not shown) for the automated news service. Therefore, if the contents of the news story should change, these changes would automatically be incorporated into the show folder.

At step 308, the director, using workstation 112, instructs AVPS 116 to select a specific show folder that has been created by the producer. AVPS 116 reads and translates the information within the show folder. By translating the information, AVPS 116 transfers the data from the show folder to a show template and, as result, generates broadcast instructions for executing the show. The show template is a generic set of broadcast instructions that can be reused many times to produce a variety of different shows. The show template contains a set of standard commands, including transitional elements and instructions, to the production crew to integrate a plurality of elements to execute the show. For instance, the elements can include video switching with a defined transition effect; audio mixing; camera controls (such as pan, tilt, zoom and focus); external machine controls, via communication protocols (such as a play, search and stop command for video tape recorders (VTR)s, video servers/virtual recorders (VR)s, digital video devices (DVD)s, and digital audio tape (DAT) and cassette equipment); teleprompting system controls; graphics controls (such as digital video effects (DVE) and character generators and/or still stores); general purpose interface commands for input/output contact closures (momentary and latching) to control external equipment without the need for using a communications protocol (such as studio lighting); and other special effects.

The show template is basically a stored file of broadcast instructions that can be used in whole or in part as a starting point to produce a show. The show template can be located in a file on a directory or library on server 110 or another server that is a part of AVPS 116. AVPS 116 recalls the show template by filename, adds the news stories from the show folder, generates broadcast instructions and saves the broadcast instructions in a separate me or directory on a server. The broadcast instructions file is configurable to be modified by the director. The director can also change the show template as desired.

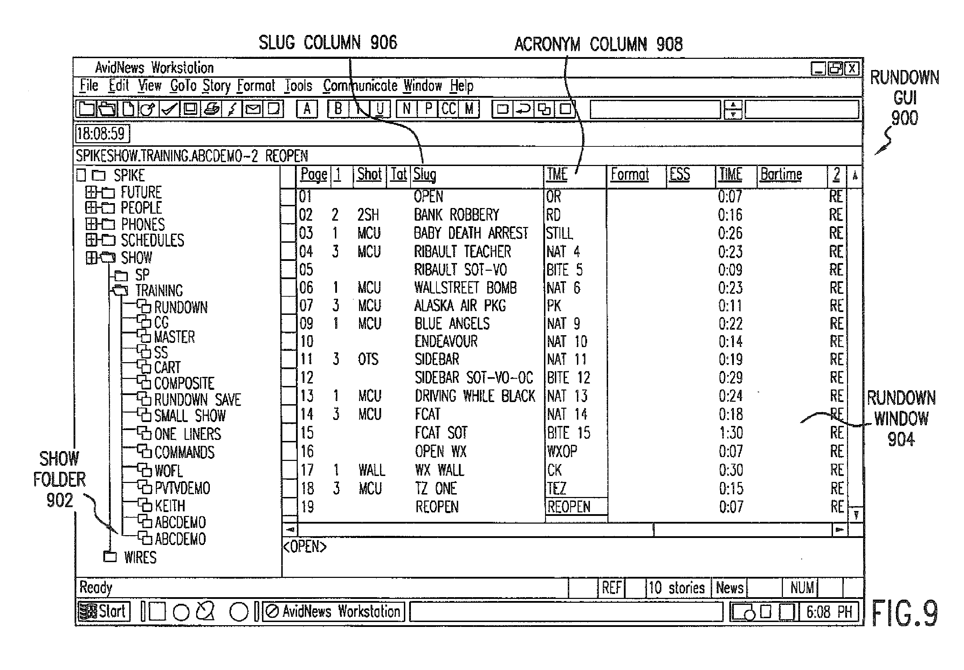

FIG. 9 illustrates one embodiment of a graphical users interface (GUI) 900 for generating and editing a show rundown located in show folder 902. In this embodiment, the director can utilize GUI 900 00 open show folder 902 to view the news stories selected for the news program. The news stories are listed in rundown window 904. As shown, show folder 902, in this representative embodiment, contains nineteen elements or news stories that has been selected by the producer. A brief description or short title for each element or news story is shown in slug column 906. As discussed above, each news story is linked to its associated script, graphics template, video clip or audio recording.

The director can use GUI 900 to provide instructions or commands to enable AVPS 11600 translate the show rundown into broadcast instructions. For example, in one embodiment, the broadcast instructions represent a Transition Macro™. As described in detail in the '161 application, a Transition Macro™ comprises a set of video production commands, where each video production command is transmitted from a processing unit to a video production device. Transition Macro1M also refers to a set of icons that have been dragged and dropped (i.e., assembled) onto the control lines of a Transition Macro™ time sheet.

Referring back to FIG. 9, AVPS 116 in this embodiment translates the director's instructions provided in GUI 900 to populate the Transition Macro™ time sheet with Transition Macro Editor™ (fMB) files. Typically, the director would create TMB files comprising all the video production commands necessary to represent an element on the show rundown. The TME files enables the director to build a show using hotkeys that can be programmed to represent typical show segments found in the show rundown, such as INTROIPKG/TAG, VO, SOT, OTS, VO/SOT combination, on camera and other elements or segments of a show. Accordingly, all the commands that the director would need to communicate with the production crew are illustrated and stored in the TME files.

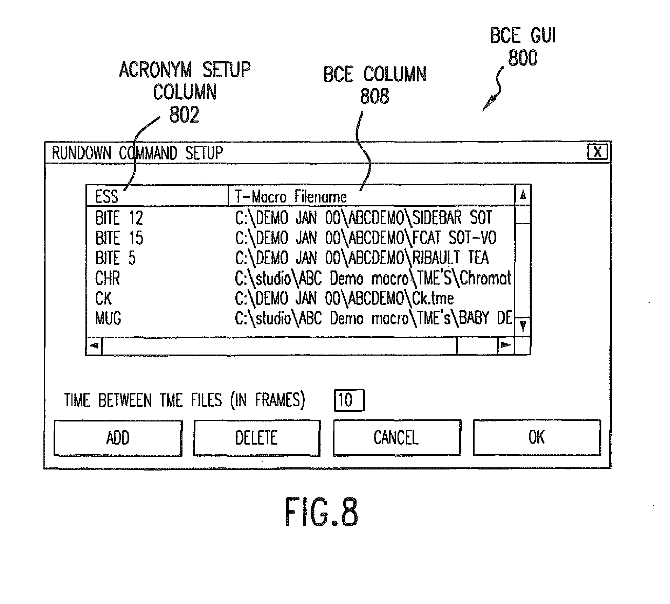

Once the TME files have been created, the director would create an association file identifying an acronym that is tied to a specific TME file. FIG. 8 illustrates a representative embodiment of TME GUI 800. In TME GUI 800, acronym setup column 802 and TME column 808 list all acronyms associated with their respective TME files. GUI 800 provides a user friendly environment for the director to add or modify acronym association files and store them for future use. Referring back to FIG. 9, the acronym would be entered in acronym column 908 for each news story or element listed in rundown window 904. The acronym links the show folder to the requisite video production commands or instructions in the TME files. When the show rundown is air-ready, the director would activate the conversion process to pull the associated TME files into the Transition Macro™ time sheet.

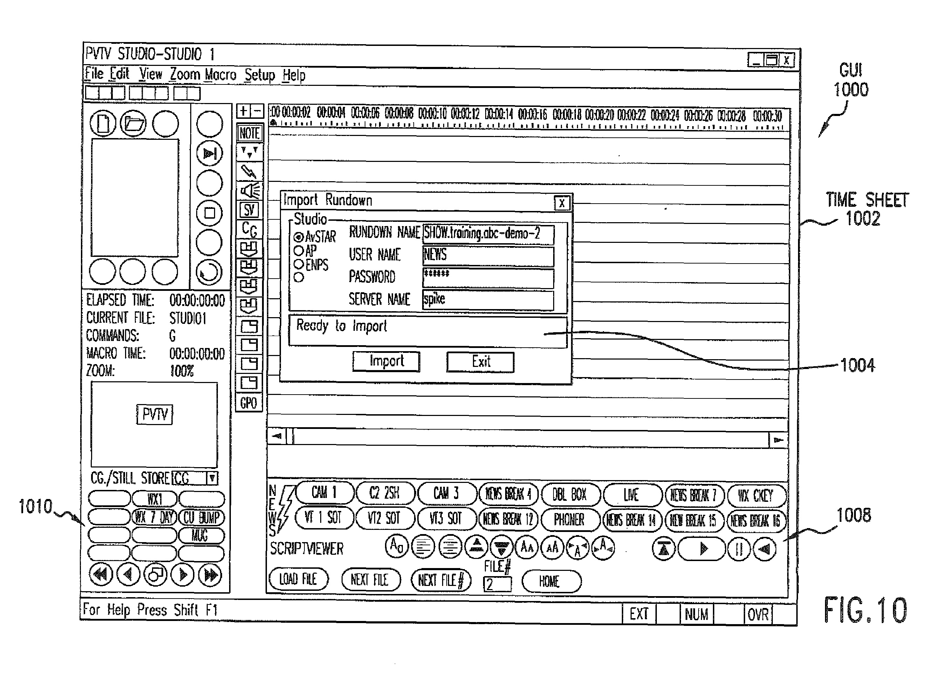

FIG. 10 illustrates a representative embodiment of GUI 1000 containing a Transition Macro™ time sheet 1002. GUI 1000 includes a time sheet 1002, teleprompting system graphical controls 1008 for a controlling teleprompting system (not shown), and character generator graphical controls 1010 for controlling one or more character generators. As shown, time sheet 1002 has not been with TME files. To load the TME files into time sheet 1002, the director, in one embodiment, can activate an icon, use a pull-down menu and the like to execute an import function. In this embodiment, import window 1004enables the director to specify the show folder 902 to be converted into broadcast instruction. During the conversion process, the acronyms listed in acronym column 908 would call up the TME files.

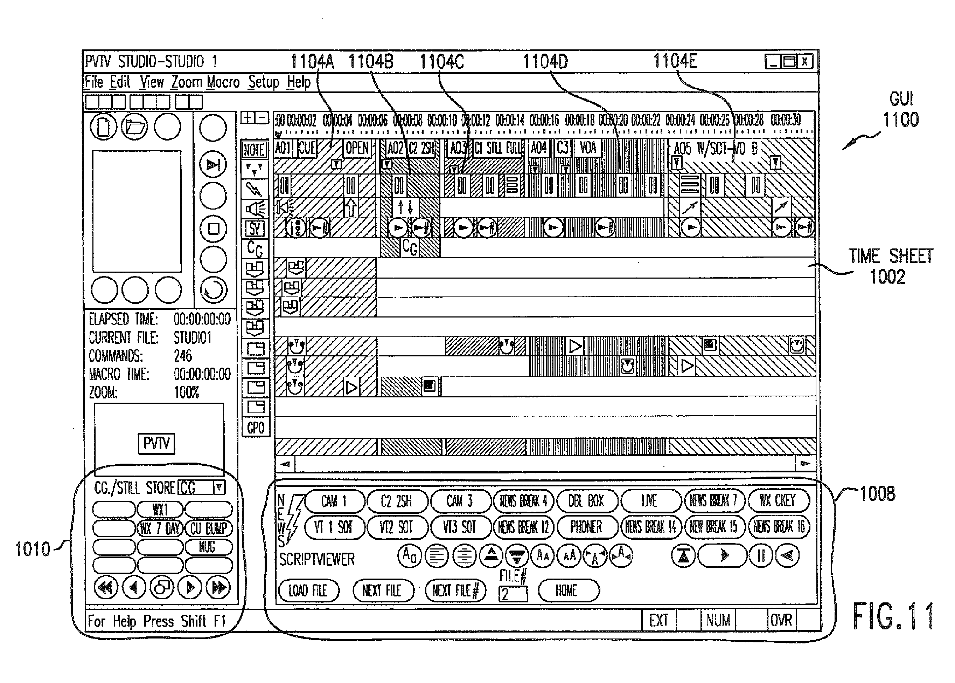

As shown in FIG. 11, GUI 1100 provides a representative embodiment of time sheet 1002 that has been populated with TME files following the conversion process. In this embodiment, TME files 1104A-1104E represents the video production commands for five elements from the show rundown, In one embodiment, different colors can be assigned to each of the TME files 1104A-1104E to allow the director to quickly and visually identify the type of element (e.g., YO, INTRO, SOT and the like).

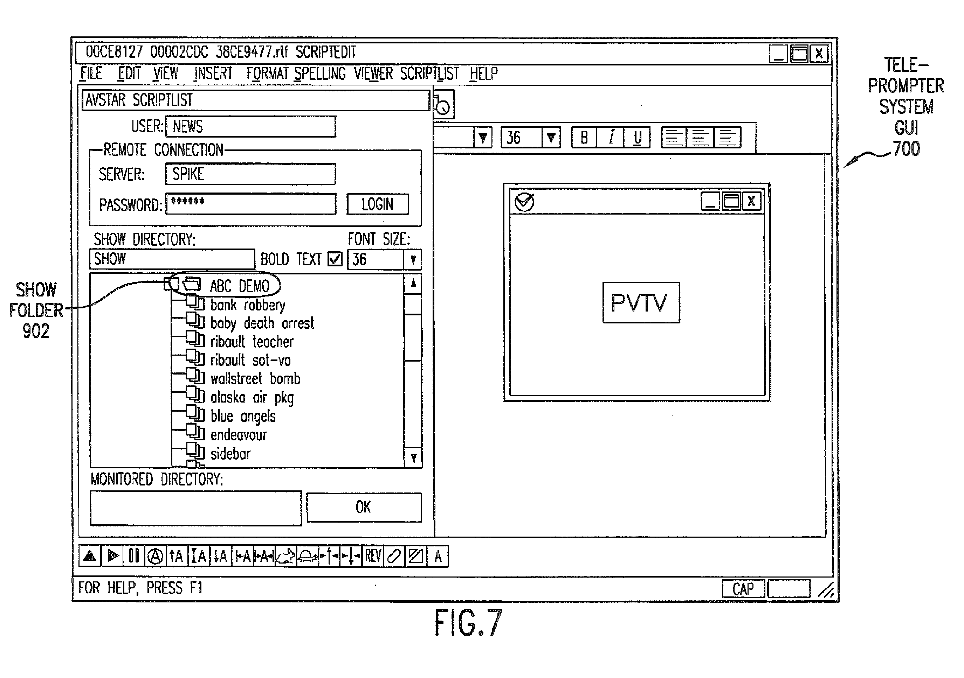

Activating import window 1004 would also pull in the associated scripts into a script viewer play list and graphics, for example character generator, data into AVPS 116 and the graphic equipment. FIG. 7 illustrates a representative embodiment of a script viewer GUI 700. The director can activate a show script monitoring program by clicking on an icon, using a pull-down menu and the like. GUI 700 is mapped to data server 624 and monitors it for changes. The monitoring program automatically pulls up scripts and associated elements in real time and parses out, for example, character generator data to insert into the appropriate character generator template with the character generator equipment.

As discussed, a file containing the broadcast instructions (e.g., Transition Macro™ time sheet) can be stored on a server within system I 00. The director can also change the show template as desired. Referring back to FIG. 3, at step 312, the director retrieves the broadcast instructions file, edits and/or approves the broadcast instructions for the news program. Upon approval, the broadcast instruction file is updated and saved to a location on the server. Accordingly, the director can preview the show prior to air time. Alternatively, the broadcast instructions can be executed immediately. As such, the broadcast instruction (e.g., Transition Macro™) would pull in all scripts, character generators and video as the show airs. Nonetheless, at step 316, AVPS 116 executes the show based on the director's approved broadcast instructions. As described in the '161 application, the director can alter the broadcast instructions during the execution of the show.

A significant feature of the present invention is the ability to monitor and synchronize the producer's show rundown with the broadcast instructions. Referring to FIG. 3, at step 320, AVPS 116 automatically updates the approved broadcast instruction file as the show is executed. In other words, a processing unit (not shown) within the Full News Integration and Automation System 100 regularly monitors inter-file activity to detect changes in the show folder, including the script text, graphic effects, file locations, etc. The processing unit also detects the addition or deletion of news stories on the producer's show rundown. If any of these changes are detected, the broadcast instructions are automatically revised to update the script, commands, instructions, timeline, etc. Since the news broadcast must be executed within an established time frame, e.g. a thirty minute news program, the processing unit only monitors and synchronizes the portion of the broadcast instructions that has not been executed. Moreover, the processing unit adjusts the remaining news stories and transitional elements to ensure that the total time for the show does not exceed the time scheduled for the news program. The processing unit can be programmed to adjust the monitoring and synchronization protocol to meet the needs of the director. For instance, the processing unit can be configured to automatically detect and synchronize changes from the producer's show rundown in real time. Alternatively, the processing unit can be programmed to poll and synchronize the system, for example, every two minutes, or at some other time interval set by the director. The processing unit can be a component of AVPS 116, server 110, a separate processing device, or the like as would be apparent to a person skilled in the relevant art(s).

Accordingly, the present invention may eliminate the significant building time required to develop broadcast instructions (e.g., Transition Macro™). Typically, a thirty minute news program would take at least sixty to ninety minutes to build, excluding the amount of time the director spends marking the producer's show rundown, itself. In the event of an extensive news breaking event, the entire rundown can change minutes before air time. The present invention overcomes this problem. By eliminating the sixty to ninety minute building time, the producer can make the necessary changes to the show rundown and the director can recapture and convert the rundown into new broadcast instructions in a very short time period. Moreover, the director and producer would be freed to work on other elements of the news program.

Upon completion of the broadcast, at step 324, AVPS 116 saves the executed broadcast instructions to a broadcast folder in a distinct directory or library. The broadcast folder is configured so that AVPS 116 can retrieve and execute part or all of the broadcast instructions in future shows. In addition to the broadcast instructions, the broadcast folder also includes a link identifying the location of a video tape recording or virtual recording file of the broadcasted show. The video tape or virtual recording can be retrieved, viewed, edited or rebroadcasted.

### IV. Re-broadcasting in Full News Integration and Automation

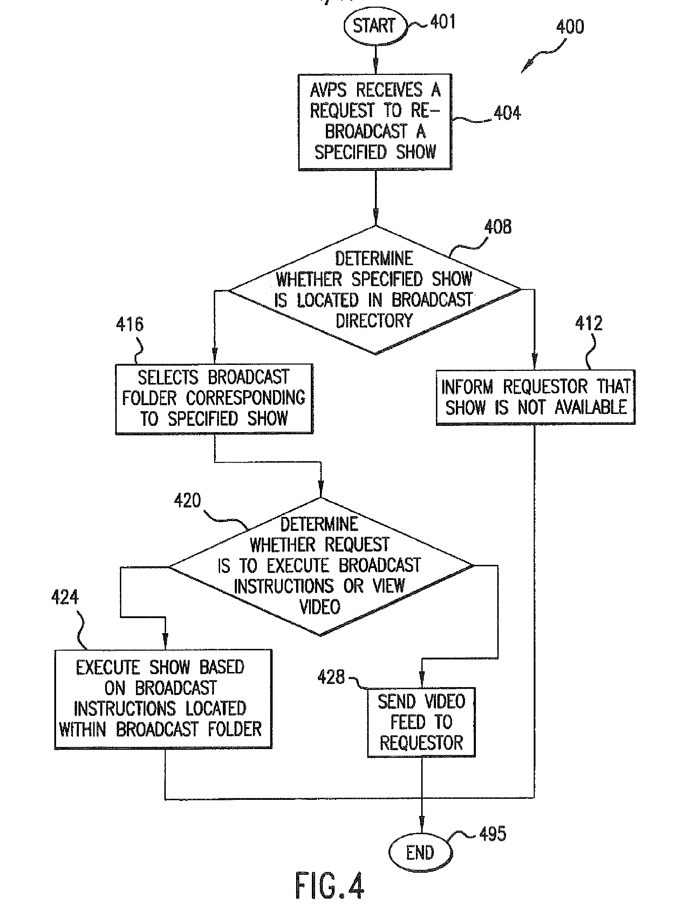

One feature of the present invention is the ability to rebroadcast a video show. For instance, one example of a rebroadcast is illustrated in FIG. 4. In FIG. 4, flowchart 400 represents the general operational flow of an embodiment of the present invention. More specifically, flowchart 400 shows an example of a control flow for producing a news program for subsequent broadcasts in a video production environment having full news integration and automation.

At step 404, AVPS 116 receives a request to re-broadcast a specified show. The request can be generated from 'the director at workstation 112. Alternatively, the request can come from an Internet user accessing server 110 from a web site configured to stream or play videos produced on AVPS 116.

At step 408, AVPS 116 searches server 11a to determine whether the requested show is located in the broadcast directory or library. If the show cannot be located, at step 412, AVPS 116 notifies the requestor that the specified show is not available for broadcast. However, if AVPS 116 is able to locate the specified show, at step 416, the associated broadcast folder is selected. At step 420, AVPS 116 determines whether the request is to re-execute the show's broadcast instructions or view the video affiliated with the broadcast folder. If the request is to re-execute the show's broadcast instructions, at step 424, AVPS 116 executes the show as described above in steps 312-324. However, if the request is to simply view the video, at step 428, the video tape or virtual file is located and loaded for viewing. The video or the virtual file is converted to a datagram and routed to the requestor at one of the workstations coupled to bus 118, or the datagram can be routed to an Internet user by using a Transmission Control Protocol (TCP) or User Datagram Protocol (TCP) over IP connection via server 110. As would be apparent to a person skilled in the relevant art(s), alternative protocols can be used to transmit the video feeds to the requestor on a network or the global Internet.

The present invention (i.e., system 100, AVPS 116, server 110 or any part thereof) can be implemented using hardware, software or a combination thereof and can be implemented in one or more computer systems or other processing systems. In fact, in one embodiment, the invention is directed toward one or more computer systems capable of carrying out the functionality described herein.

### V. Conclusion

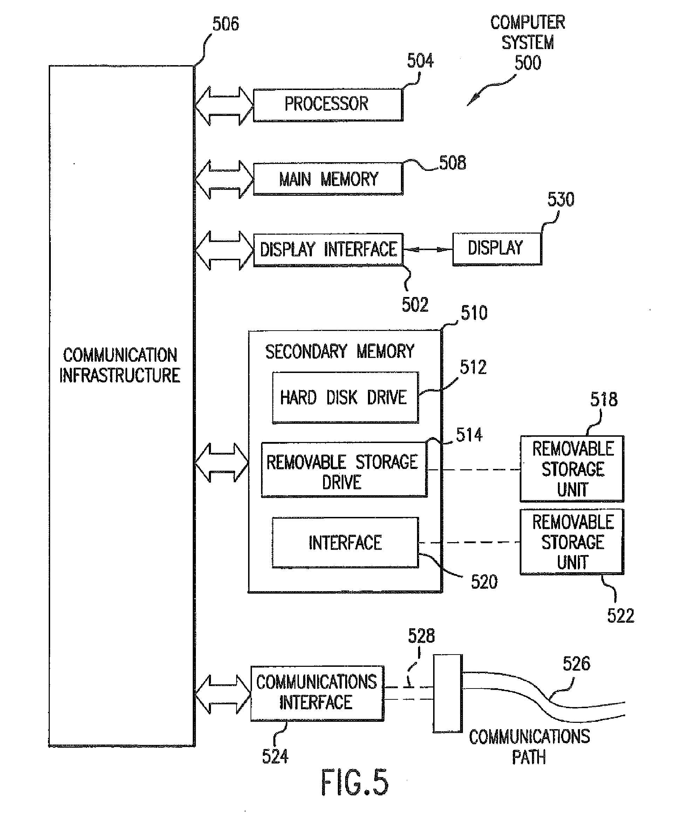

An exemplary computer system 500 useful in implementing the present invention is shown in FIG. 5. Computer system 500 includes one or more processors, such as processor 504. The processor 504 is connected to a communication infrastructure 506 (e.g., a communications bus, cross-over bar, or network). Various software embodiments are described in terms of this exemplary computer system. After reading this description, it will become apparent to a person skilled in the relevant art(s) how to implement the invention using other computer systems and/or computer architectures.

Computer system 500 can include a display interface 502 that forwards graphics, text, and other data from the communication infrastructure 506 (or from a frame buffer not shown) for display on the display unit 530.

Computer system 500 also includes a main memory 508, preferably random access memory (RAM), and can also include a secondary memory 510. The secondary memory 510 can include, for example, a hard disk drive 512 and/or a removable storage drive 514, representing a floppy disk drive, a magnetic tape drive, an optical disk drive, etc. The removable storage drive 514 reads from and/or writes to a removable storage unit 518 in a well-known manner. Removable storage unit 518, represents a floppy disk, magnetic tape, optical disk, etc. which is read by and written to removable storage drive 514. As will be appreciated, the removable storage unit 518 includes a computer usable storage medium having stored therein computer software and/or data.

In alternative embodiments, secondary memory 510 can include other similar means for allowing computer programs or other instructions to be loaded into computer system 500. Such means can include, for example, a removable storage unit 522 and an interface 520. Examples of such can include a program cartridge and cartridge interface (such as that found in video game devices), a removable memory chip (such as an EPROM, or PROM) and associated socket, and other removable storage units 522 and interfaces 520 which allow software and data to be transferred from the removable storage unit 522 to computer system 500.

Computer system 500 can also include a communications interface 524. Communications interface 524 allows software and data to be transferred between computer system 500 and external devices. Examples of communications interface 524 can include a modem, a network interface (such as an Ethernet card), a communications port, a PCMCIA slot and card, etc. Software and data transferred via communications interface 524 are in the form of signals 528 which can be electronic, electromagnetic, optical or other signals capable of being received by communications interface 524. These signals 528 are provided to communications interface 524 via a communications path (i.e., channel) 526. This channel 526 carries signals 528 and can be implemented using wire or cable, fiber optics, a phone line, a cellular phone link, an RF link and other communications channels.

In this document, the terms "computer program medium" and "computer usable medium" are used to generally refer to media such as removable storage drive 514, a hard disk installed in hard disk drive 512, and signals 528. These computer program products are means for providing software to computer system 500. The invention is directed to such computer program products.

Computer programs (also called computer control logic) are stored in main memory 508 and/or secondary memory 510. Computer programs can also be received via communications interface 524. Such computer programs, when executed, enable the computer system 500 to perform the features of the present invention as discussed herein. In particular, the computer programs, when executed, enable the processor 504 to perform the features of the present invention. Accordingly, such computer programs represent controllers of the computer system 500.

In an embodiment where the invention is implemented using software, the software can be stored in a computer program product and loaded into computer system 500 using removable storage drive 514, hard drive 512 or communications interface 524. The control logic (software), when executed by the processor 504, causes the processor 504 to perform the functions of the invention as described herein.

In another embodiment, the invention is implemented primarily in hardware using, for example, hardware components such as application specific integrated circuits (ASICs). Implementation of the hardware state machine so as to perform the functions described herein will be apparent to persons skilled in the relevant art(s).

In yet another embodiment, the invention is implemented using a combination of both hardware and software.

While various embodiments of the present invention have been described above, it should be understood that they have been presented by way of example only, and not limitation. Thus, the breadth and scope of the present invention should not be limited by any of the above-described exemplary embodiments, but should be defined only in accordance with the following claims and their equivalents.

## Claims

1. A method for producing a show in a production environment having at least one processing unit (504) in communications with a plurality of production devices through an automated video production system (116), comprising the steps of:
(a) receiving a show rundown comprising a plurality of story files; **characterized by**
(b) automatically converting (308) said show rundown into broadcast instructions by at least on processor (504), the broadcast instructions being recognizable by the automated video production system to control the plurality of production devices to thereby produce the show, such that each story file within the show rundown corresponds to at least one broadcast instruction to control at least one production device in the automated video production system;
(c) monitoring inter-file activity of the show rundown and synchronizing said show rundown with broadcast instructions that have not yet been executed upon detection of a change in the inter-file activity.

2. A method of claim 1, wherein step (a) comprises receiving at least one story files includes a script or graphic effects, wherein step (b) comprises converting at least one story file executable broadcast instructions for enabling the transmitting of at least one command to a teleprompting means (114) to display said script during production of the show, or at least one command to a production device to integrate the graphic effects with video associated with the at least on story file during production of the show.

3. The method of claims 1 or 2, wherein said step (c) comprises the step of:
(i) periodically polling said show rundown to detect inter-file modifications, including changes within said story files or the addition or deletion of story files to said show rundown.

4. the method of claim 3, wherein said step (c) further comprises the step of :
(ii) updating said broadcast instructions with said inter-file modifications to implement said synchronizing.

5. The method of claim 4, wherein said step (ii) comprises the step of :
(A) updating only an unexecuted portion of said broadcast instruction.

6. The method of claim 5, wherein said step (ii) further comprises the step of:
(B) adjusting said unexecuted broadcast instructions such that a total execution time for said broadcast instructions does not exceed a predetermined time.

7. The method of claims 1 or 2, wherein said step (c) comprises the step of:
updating said broadcast instructions in real time or the addition or deletion of story files to said show rundown.

8. The method of any preceding claim, further comprising the step of:
(a) associating one or more broadcast element files with each story file of said plurality of story files to link a group of production commands to each story file.

9. The method of claim 8, wherein said step (b) comprises the step of:
(i) populating a broadcast instructions time sheet (1002) with video production icons (1104A-E)by said at least one processing unit (504), the production icons, when activated, execute corresponding broadcast instructions to enable said transmitting of one or more commands, wherein a group of production icons is associated with a broadcast element file.

10. A system for producing a show in a production environment having at least one processing unit (504) in communications with a plurality of production devices through an automated video production system (116), comprising:
means for receiving a show rundown comprising a plurality of story files by
for automatically converting said show rundown into broadcast instructions recognizable by the automated video production system to control the plurality of production devices to hereby produce the show, such that each story file within the show rundown corresponds to at least one broadcast instruction to control at least one production device in the automated video production system; and
means for monitoring inter-file activity and synchronizing said show rundown with broadcast instructions that have not yet been executed upon detection of a change in inter-file activity.

11. A computer program product comprising a computer usable medium (512, 514, 528) having computer readable program code means stored therein for causing a computer (500) to produce a show in a production environment having at least a plurality of production devices, said computer readable program code means comprising:
a first computer readable program code means for enabling the computer to receive a show rundown comprising a plurality of story files; **characterized by**
a second computer readable program code means for enabling the computer (500) to convert said show rundown into broadcast instructions recognizable by an automated video production system (116) to control the plurality of production devices to hereby produce the show, such that each story file within the show rundown corresponds to at least one broadcast instruction to control at least one production device in the automated video production system; and
a third computer readable program code means for enabling the computer to monitor inter-file activity and synchronizing said show rundown with broadcast instructions that have not yet been executed upon detection of a change in the inter-file activity.
